# FASCICULE DE BREVET EUROPEEN

(11) **EP 2 164 717 B1**
(45) Date de publication et mention de la délivrance du brevet: **25.02.2015**
(21) Numéro de dépôt: 08826942.8
(22) Date de dépôt: 27.06.2008
(51) Int. Cl.: F16C 33/76, B60G 15/06, F16C 35/04, F16C 19/10

(54) **BUTEE DE SUSPENSION COMPRENANT UN ELEMENT D'ETANCHEITE MOBILE**
FEDERPUFFER MIT MOBILEM DICHTUNGSELEMENT
SUSPENSION STOP COMPRISING A MOBILE SEAL ELEMENT

(30) Priorité: 29.06.2007 FR 0704723
(43) Date de publication de la demande: 24.03.2010
(73) Titulaire: SNR Roulements, 74000 Annecy (FR)
(72) Inventeur: LENON, Hervé, F-74540 Gruffy (FR); MERMOUD, Gérard, F-74330 La Balme de Sillingy (FR); SAUNIER, Ludovic, F-74540 Saint Felix (FR)
(74) Mandataire: Sayettat, Julien Christian
(86) Numéro de dépôt international: PCT/FR2008/000923
(87) Numéro de publication internationale: WO 2009/019340

(56) Documents cités:
- EP-A- 1 162 091
- FR-A- 2 375 484
- US-A- 1 895 167
- US-A- 5 439 298
- US-B1- 6 296 396

## Description

L'invention concerne une butée de suspension de véhicule automobile, notamment destinée à être intégrée dans une jambe de suspension télescopique d'une roue directrice de véhicule automobile.

L'invention s'applique à une butée de suspension comprenant une coupelle supérieure fixe destinée à être associée à la caisse du véhicule, une coupelle inférieure tournante comportant un appui pour le ressort de suspension et des corps roulants disposés entre lesdites coupelles pour permettre leur rotation relative.

Pour empêcher d'une part les fuites du lubrifiant présent dans l'espace de roulement et, d'autre part la contamination dudit espace avec des polluants extérieurs, on connaît l'utilisation de joints d'étanchéité comprenant un élément d'étanchéité souple qui est associé ou intégré à l'une des coupelles pour être en contact frottant sur l'autre coupelle, comme exposé dans le document EP 1 162 091.

Cette réalisation présente notamment l'inconvénient d'induire un couple de frottement lors de la rotation relative des coupelles, ce qui est préjudiciable pour l'utilisation de la butée dans le montage d'une roue directrice.

Pour résoudre ce problème, on a proposé de remplacer les éléments d'étanchéité frottants par des chicanages formés au niveau de l'espace libre entre les coupelles. Toutefois, la suppression du contact frottant dégrade également la fiabilité de la fonction d'étanchéité. En outre, les efforts subis par la butée tendent à déformer l'espace libre entre les coupelles, ce qui modifie la configuration des chicanages formés dans un état non optimal relativement à l'étanchéité.

Par ailleurs, du fait des changements de configuration tant des chicanages que des contacts frottants, le couple de rotation est difficilement maîtrisable en fonction des déformations de la butée de suspension.

L'invention vise à palier les problèmes de l'art antérieur en proposant une butée de suspension dans laquelle le compromis entre la fonction étanchéité et le couple induit est obtenu de façon particulièrement satisfaisante, et ce même en cas de déformation de la butée sous l'effet des efforts subis.

A cet effet, l'invention propose une butée de suspension de véhicule automobile, ladite butée comprenant une coupelle supérieure, une coupelle inférieure et des corps roulants disposés entre lesdites coupelles pour permettre leur rotation relative, lesdites coupelles étant agencées pour présenter entre elles au moins un espace annulaire, ladite butée comprenant en outre un élément d'étanchéité qui est disposé dans ledit espace pour être en contact frottant sur chacune des coupelles, ledit élément d'étanchéité étant monté mobile par rapport à au moins une coupelle.

D'autres particularités et avantages de l'invention apparaîtront dans la description qui suit, faite en référence aux figures jointes dans lesquelles :
- les figures 1 à 6 représentent de façon partielle et en coupe axiale une butée de suspension selon respectivement un mode de réalisation de l'invention ;
- la figure 6a représente en perspective l'élément d'étanchéité replié du mode de réalisation selon la figure 6 ;
- les figures 7 et 8 représentent de façon partielle et en coupe axiale une butée de suspension selon respectivement un mode de réalisation de l'invention ;
- les figures 9 et 10 représentent de façon partielle et en coupe axiale une butée de suspension selon respectivement une variante du mode de réalisation de la figure 8.

Dans cette description, les termes de positionnement dans l'espace sont pris en référence à l'axe de rotation de la butée de suspension (vertical sur les figures qui montrent un côté de la coupe, l'autre côté étant symétrique par rapport audit axe). En particulier, le terme « intérieur » est relatif à une disposition proche de cet axe et le terme « extérieur » est relatif à une disposition à distance de cet axe. Par ailleurs, les termes « supérieur » et « inférieur » sont relatifs à la disposition de la butée telle que représentée sur les figures.

Une roue d'un véhicule automobile, notamment une roue directrice, est montée sur le châssis par l'intermédiaire d'une jambe de force qui permet la suspension de la caisse relativement au sol. A cet effet, la jambe de force comprend classiquement un amortisseur, un ressort de suspension ainsi qu'une butée de suspension sur laquelle le ressort vient en appui.

En relation avec les figures, on décrit ci-dessous des modes de réalisation d'une butée de suspension qui comprend une coupelle supérieure fixe 1 destinée à être associée à la caisse du véhicule, une coupelle inférieure tournante 2 comportant un appui 3 pour le ressort de suspension et des corps roulants 4 disposés entre lesdites coupelles pour permettre leur rotation relative autour d'un axe. Ainsi, lorsque le ressort est sollicité en compression et en détente, l'enroulement des spires de ce dernier sur elles-mêmes est modifié, ce qui entraîne la rotation de la coupelle inférieure 2. En outre, le braquage des roues induit également une rotation de la coupelle inférieure 2.

Dans les modes de réalisation représentés, les coupelles supérieure 1 et inférieure 2 comprennent chacune une rondelle 5, 6, notamment réalisée en tôle emboutie, qui est pourvue d'une piste de roulement respectivement inférieure et supérieure pour les corps roulants 4.

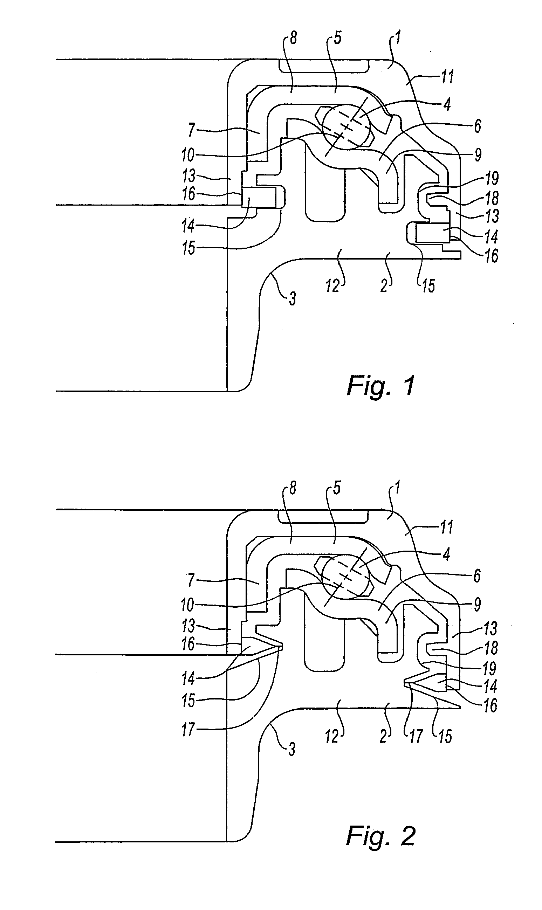

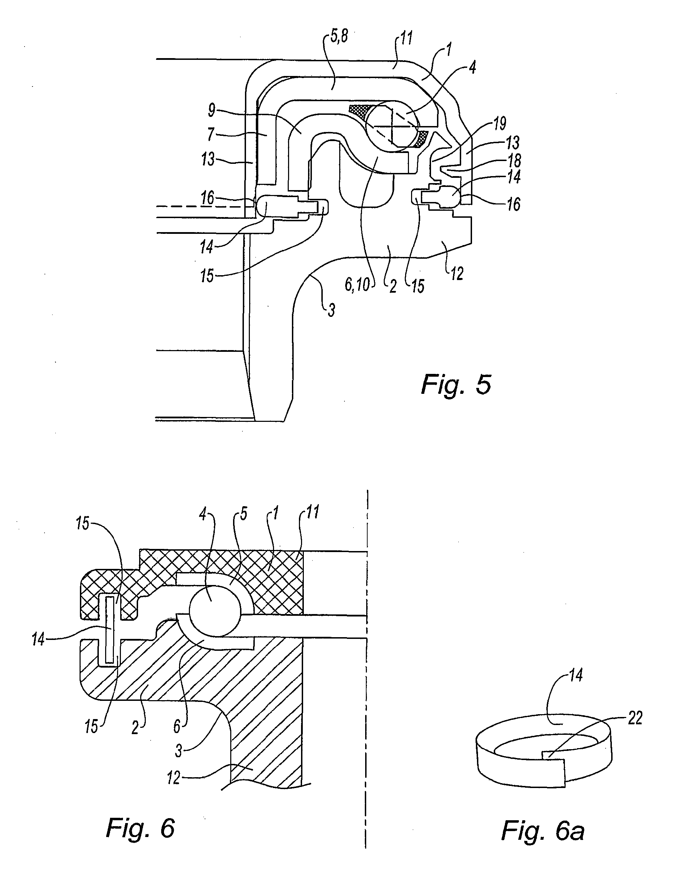

Plus précisément, sur les figures 1 à 5 et 7 à 10, la rondelle supérieure 5 présente une portée intérieure axiale de rigidification 7, et une portée sensiblement radiale 8 sur la partie inférieure de laquelle la piste de roulement supérieure est formée. La rondelle inférieure 6 comprend une portée axiale extérieure (figures 1 à 4) ou intérieure (figures 5 et 7 à 10) de rigidification 9, et une portée axi-radiale 10 sur laquelle la piste de roulement inférieure est formée en regard de la piste de roulement supérieure pour former un chemin de roulement à contact oblique des billes 4.

La butée comprend en outre deux pièces d'habillage 11, 12, notamment réalisées par moulage d'un matériau thermoplastique rigide, par exemple de type polyamide 6.6. Ces pièces sont respectivement un couvercle 11 associé sur la rondelle supérieure 5 pour être interposé entre le châssis et ladite rondelle supérieure, et un support 12 associé sous la rondelle inférieure 6, ledit support comprenant l'appui ressort 3. Ces pièces d'habillage 11, 12 permettent notamment une reprise des efforts du ressort et éventuellement de ceux de la butée de choc.

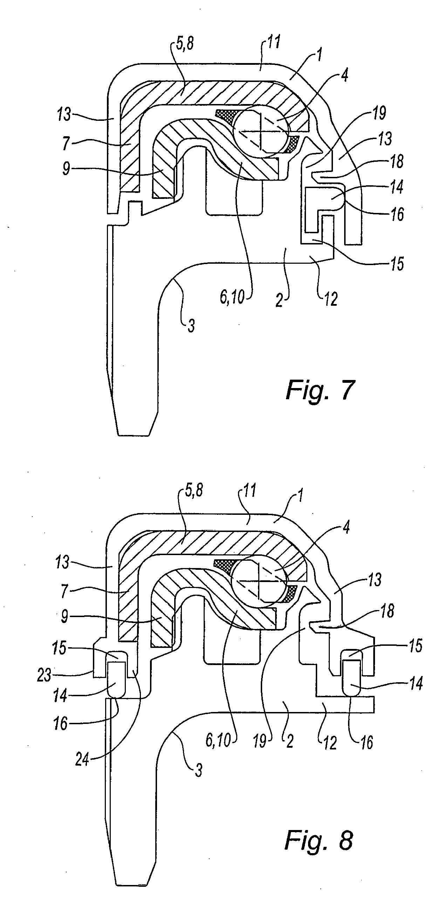

Dans les modes de réalisation représentés sur les figures 1 à 5 et 7 à 10, le couvercle 11 comprend une jupe annulaire 13 formant de chaque côté du support un espace annulaire entre ledit couvercle et ledit support. Sur les figures 1 à 5 et 7, la butée comprend deux espaces annulaires latéraux qui sont formés entre les diamètres intérieurs et extérieurs du couvercle 11 et du support 12, lesdits espaces annulaires présentant un jeu de sorte à permettre la rotation du support 12 par rapport au couvercle 11 sans interférence entre ceux-ci. Sur les figures 8 à 10, les espaces annulaires sont axiaux en étant formés dans un jeu axial qui est formé entre le support 12 et l'extrémité de la jupe 13.

La butée de suspension comprend en outre un élément d'étanchéité 14 qui est disposé dans l'espace annulaire, notamment dans chacun des espaces annulaires, pour être en contact frottant sur chacune des coupelles 1, 2, ledit élément d'étanchéité étant monté mobile par rapport à au moins une coupelle 1, 2.

Ainsi, la réalisation suivant l'invention permet de combiner la fonction d'étanchéité induite par le contact frottant à la limitation du couple induit par la possibilité de déplacement dudit élément d'étanchéité par rapport à au moins une coupelle 1, 2. En particulier, en cas de déformation de la butée, notamment du couvercle 11 relativement au support 12, une diminution du jeu formé dans l'espace annulaire ne conduit pas une augmentation du couple induit par le frottement de l'élément d'étanchéité 14. En outre, la butée selon l'invention permet d'obtenir un couple de rotation qui est sensiblement constant et donc maitrisable de façon précise sur une plage de fonctionnement étendue, et ce notamment relativement aux sollicitations mécaniques que la butée de suspension a à subir dans le cadre de son utilisation.

Sur les figures 1 à 5, les espaces annulaires présentent chacun une gorge annulaire 15 radiale qui est formée dans le support 12, respectivement sur le diamètre intérieur et sur le diamètre extérieur dudit support, de sorte à étanchéifier les deux côtés de la butée de suspension. L'élément d'étanchéité 14 est monté mobile dans la gorge 15 et, à l'opposé de ladite gorge, est en contact frottant sur le couvercle 11. Ainsi, la gorge 15 permet le guidage de l'élément d'étanchéité 14 lors de ses déplacements, tout en assurant un contact frottant étanche dudit élément sur le support 12 et sur le couvercle 11.

Dans le mode de réalisation de la figure 7, l'espace annulaire présente une gorge annulaire 15 axiale qui est formée dans le support 12. Dans le mode de réalisation des figures 8 à 10, une gorge annulaire 15 axiale est formée dans le couvercle 11 et, dans le mode de réalisation de la figure 6, une gorge annulaire 15 axiale est respectivement formée dans le support 12 et dans le couvercle 11.

L'élément d'étanchéité 14 présente une géométrie annulaire qui peut être réalisée d'une pièce, par exemple par moulage, ou ledit élément peut présenter une découpe pour sa disposition dans la gorge 15, ledit élément étant ensuite refermé dans ladite gorge au niveau de la découpe, notamment par collage ou par clipage.

Sur les figures 1 à 5 et 7 à 10, chaque espace annulaire est délimité par une portée 16 formée sur la surface intérieure de la jupe 13 (figures 1 à 5 et 7) ou sur la surface supérieure du support 12 (figures 8 à 10), l'élément d'étanchéité 14 étant en contact frottant sur ladite portée. Par ailleurs, l'élément d'étanchéité 14 est monté mobile dans la gorge 15 selon une direction normale à ladite portée. Ainsi, en cas de déplacement relatif du couvercle 11 et du support 12, la portée 16 induit un effort de déplacement de l'élément d'étanchéité 14 dans la gorge 15 qui est optimisé pour limiter le couple résultant.

Sur les figures 1 et 3 à 5, les gorges 15 s'étendent radialement et les portées 16 s'étendent axialement. Dans cette réalisation, un jeu radial est formé entre les diamètres de l'élément d'étanchéité 14 et de la gorge 15 de sorte à permettre un déplacement radial dudit élément d'étanchéité dans ladite gorge. Par ailleurs, l'élément d'étanchéité 14 présente une section sensiblement analogue à celle de la gorge 15, à savoir rectangulaire sur la figure.

Selon une variante, un jeu peut être formé entre les périphéries externe de l'élément d'étanchéité 14 et interne de la gorge 15. Selon une autre variante, un contact glissant par frottement peut être réalisé entre la gorge 15 et la partie de l'élément d'étanchéité 14 qui est disposé à l'intérieur.

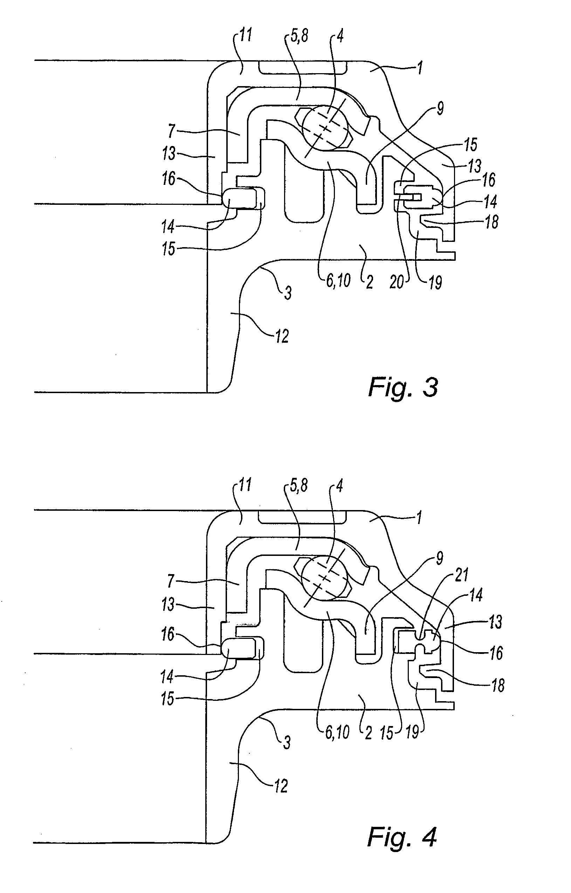

Sur la figure 3, l'intérieur de la gorge extérieure 15 est pourvu d'une saillie annulaire 20, la base de l'élément d'étanchéité 14 comprenant un logement annulaire qui est engagé dans ladite saillie pour améliorer le guidage radial dudit élément d'étanchéité dans ladite gorge.

Sur la figure 4, l'élément d'étanchéité 14 comprend une zone facilitant sa déformation par appui de la portée 16 sur son extrémité de contact. Plus précisément, l'élément d'étanchéité 14 présente :
- une extrémité de géométrie arrondie pour améliorer le contact frottant sur la portée 16 ;
- une base rectangulaire qui est engagée dans la gorge 15 de géométrie analogue ; et
- un pont de matière 21 reliant ladite extrémité à ladite base, ledit pont étant de section réduite pour permettre le fléchissement et la translation de ladite extrémité par rapport à ladite base.

Sur la figure 5, la gorge 15 extérieure présente deux étages qui sont agencés pour permettre le coulissement radial de respectivement une partie de l'élément d'étanchéité 14. Plus précisément, l'élément d'étanchéité 14 présente une base d'épaisseur inférieure à celle de son extrémité, la partie intérieure de ladite extrémité étant reçue dans l'étage extérieur de la gorge 15. Par ailleurs, sur la figure 5, l'élément d'étanchéité intérieure 14 présente également cette géométrie, la base étant reçue dans la gorge 15 et la partie extérieure de l'extrémité étant guidée par appui sur une portée radiale du support 12.

Dans la réalisation selon les figures 1 et 3 à 10, l'élément d'étanchéité 14 peut être réalisé en matériau élastomérique, par exemple en caoutchouc naturel, en polyuréthane, en matériau thermoplastique élastomère (TPE), ou en matériau thermoplastique rigide, par exemple en polyéthylène, en polypropylène, en polyamide 6, 6.6, 11 ou 12. Dans ces réalisations, la partie de l'élément d'étanchéité 14 qui est en contact frottant sur la portée 16 peut être pourvue d'au moins une lèvre d'étanchéité souple, par exemple obtenue par surmoulage sur un élément d'étanchéité en matériau thermoplastique, ou présenter une géométrie améliorant le contact frottant, par exemple en présentant un bout arrondi.

Dans le cas où l'élément d'étanchéité 14 est rigide et la gorge 15 est radiale, le couvercle 11 peut être monté en force sur le support 12 dans la gorge 15 duquel ledit élément d'étanchéité est disposé, ledit élément étant mis en contact frottant sur ledit couvercle lors de ce montage. En variante, pour faciliter le montage, on peut prévoir un chanfrein sur le bord libre de la jupe 13 et/ou un bout arrondi pour l'élément d'étanchéité 14.

Dans le cas où l'élément d'étanchéité 14 est souple, on peut prévoir l'utilisation d'un élément linéaire, par exemple obtenu par extrusion, qui est découpé et placé dans la gorge 15 avant d'être refermé, par exemple par collage. En outre, toujours dans cette réalisation, l'élément d'étanchéité 14 peut être renforcé par utilisation d'une armature rigide sur laquelle le matériau souple est disposé, par exemple par surmoulage.

Sur la figure 2, l'élément d'étanchéité 14 est réalisé en matériau thermoplastique en étant moulé d'une seule pièce avec le support 12, ledit élément d'étanchéité étant associé audit support par un pont de matière cassable 17 de sorte, après rupture, à être mobile par rapport audit support. En particulier, la rupture du pont de matière 17 peut être réalisée lors du montage du couvercle 11 sur le support 12.

Par ailleurs, dans cette réalisation, l'élément d'étanchéité 14 et la gorge 15 présentent une section prismatique divergente de sorte à former un jeu axi-radial pour permettre un pivotement dudit élément d'étanchéité dans ladite gorge en cas de déplacement du couvercle 11 par rapport au support 12.

Dans les modes de réalisations représentés sur les figures 1 à 5 et 7 à 10, la partie de la jupe 13 délimitant l'espace annulaire extérieur est pourvue de saillies 18, le support 12 présentant une cavité 19 dans laquelle lesdites saillies sont disposées sans interférence de sorte à former crochet de maintien du couvercle 11 sur le support 12.

Sur la figure 6, l'espace annulaire extérieur présente deux gorges annulaires 15 axiales qui sont formées respectivement sur le couvercle 11 et sur le support 12, lesdites gorges étant en regard axial de sorte à former un logement dans lequel l'élément d'étanchéité 14 est monté. Plus précisément, l'élément d'étanchéité 14 est formé par une bande repliée en anneau (figure 6a), les bords supérieur et inférieur de ladite bande étant respectivement guidés dans une gorge 15 de sorte à assurer le montage mobile et le contact frottant dudit élément d'étanchéité par rapport au couvercle 11 et au support 12. Pour ce faire, un jeu axial est formé entre la dimension axiale de l'élément d'étanchéité 14 et celle du logement formée entre les gorges 15, de sorte à permettre un déplacement axial dudit élément d'étanchéité dans ledit logement.

Par ailleurs, comme représenté sur la figure 6a, le repliement de la bande peut être réalisé avec un recouvrement 22 de sorte, sous l'effet du retour élastique de la bande en position plane, à permettre le placage radial des bords de la bande dans respectivement une gorge 15 et donc une mise en pression du contact frottant de ladite bande dans les gorges 15.

En outre, comme dans les autres modes de réalisation décrits, les gorges 15 peuvent contenir une substance visqueuse pour améliorer l'étanchéité conférée par l'élément 14. En particulier, la substance peut également présenter une fonction de lubrification relativement aux déplacements de l'élément d'étanchéité 14 dans la gorge 15.

Sur la figure 7, l'élément d'étanchéité 14 présente une base axiale et une extrémité radiale de contact frottant sur la portée 16. Par ailleurs, la gorge axiale 15 est agencée pour permettre une mobilité axiale et radiale de l'élément d'étanchéité 14 en fonction de l'appui exercé par la portée 16 sur l'extrémité dudit élément d'étanchéité. Pour ce faire, l'élément d'étanchéité 14 est monté dans la gorge 15 avec un jeu radial entre ces diamètres et ladite gorge, ainsi qu'avec un jeu axial entre sa dimension axiale et celle de ladite gorge.

Comme sur la figure 7, les figures 8 à 10 décrivent un mode de réalisation dans lequel les gorges 15 sont axiales, ce qui présente notamment l'avantage d'une plus grande facilité de réalisation par moulage.

Sur les figures 8 à 10, les gorges 15 s'étendent axialement et les portées 16 s'étendent radialement. Dans cette réalisation, un jeu axial est formé entre la dimension axiale de l'élément d'étanchéité 14 et celle de la gorge 15 de sorte à permettre un déplacement axial dudit élément d'étanchéité dans ladite gorge.

Par ailleurs, la gorge axiale 15 est formée sur l'extrémité inférieure du couvercle 11, la zone de contact frottant de l'extrémité de l'élément d'étanchéité 14 étant réalisée sur une portée radiale supérieure 16 du support 12. En outre, la portée radiale 16 est formée en regard de la gorge 15 avec un jeu axial suffisant pour assurer le contact frottant et la mobilité de l'élément d'étanchéité 14 dans ladite gorge.

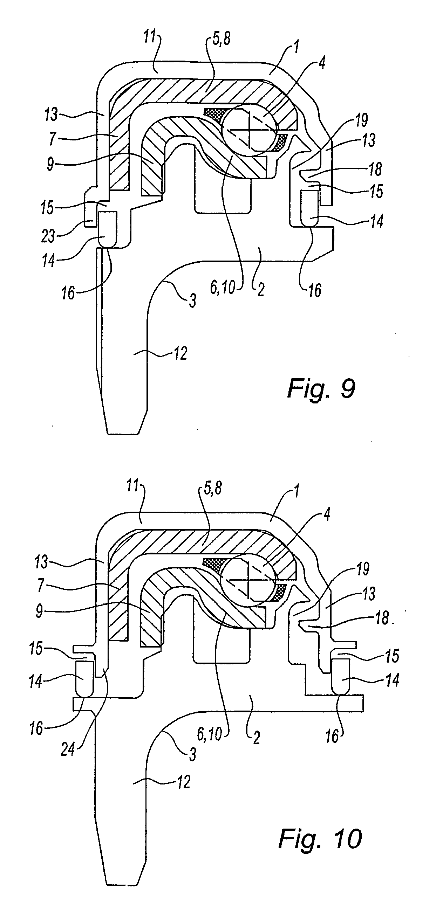

Sur la figure 8, la gorge 15 est délimitée radialement de part et d'autre par une portée annulaire axiale 23, 24, la distance entre lesdites portées étant suffisante pour permettre la mobilité de la base de l'élément d'étanchéité 14 à l'intérieur de la gorge 15. Sur la figure 9, seule la portée annulaire axiale extérieure 23 est prévue, le guidage de l'élément d'étanchéité 14 étant réalisé par contact frottant sur la face extérieure de la base dudit élément. Sur la figure 10, seule la portée annulaire axiale intérieure 24 est prévue, le guidage de l'élément d'étanchéité 14 étant réalisé par contact frottant sur la face intérieure de la base dudit élément. En outre, dans ces deux variantes, la paroi radiale de fond de la gorge 15 est conservée.

## Revendications

1. Butée de suspension de véhicule automobile, ladite butée comprenant une coupelle supérieure (1), une coupelle inférieure (2) et des corps roulants (4) disposés entre lesdites coupelles pour permettre leur rotation relative, lesdites coupelles étant agencées pour présenter entre elles au moins un espace annulaire, ladite butée étant **caractérisée en ce qu'**elle comprend en outre un élément d'étanchéité (14) qui est disposé dans ledit espace pour être en contact frottant sur chacune des coupelles (1, 2), ledit élément d'étanchéité étant monté mobile par rapport à au moins une coupelle (1, 2).

2. Butée de suspension selon la revendication 1, **caractérisée en ce que** les coupelles supérieure (1) et inférieure (2) comprennent chacune une rondelle (5, 6) qui est pourvue d'une piste de roulement respectivement inférieure et supérieure pour les corps roulants (4), ladite butée comprenant en outre deux pièces d'habillage, respectivement un couvercle (11) associé sur la rondelle supérieure (5) et un support (12) associé sous la rondelle inférieure (6), l'espace annulaire étant prévu entre ledit couvercle et ledit support.

3. Butée de suspension selon la revendication 2, **caractérisée en ce que** l'espace annulaire présente au moins une gorge annulaire (15) formée dans une pièce d'habillage (12), l'élément d'étanchéité (14) étant monté mobile dans ladite gorge et, à l'opposé de ladite gorge, étant en contact frottant sur l'autre pièce d'habillage (11).

4. Butée de suspension selon la revendication 3, **caractérisée en ce que** l'espace annulaire est délimité par une portée (16) d'une pièce d'habillage (11) sur laquelle l'élément d'étanchéité (14) est en contact frottant, ledit élément d'étanchéité étant monté mobile dans la gorge (15) selon une direction normale à ladite portée.

5. Butée de suspension selon la revendication 3 ou 4, **caractérisée en ce que** la gorge (15) s'étend radialement, un jeu radial étant formé entre les diamètres de l'élément d'étanchéité (14) et de la gorge (15), de sorte à permettre un déplacement radial dudit élément d'étanchéité dans ladite gorge.

6. Butée de suspension selon l'une quelconque des revendications 3 à 5, **caractérisée en ce que** la gorge (15) s'étend axialement, un jeu axial étant formé entre la dimension axiale de l'élément d'étanchéité (14) et celle de la gorge (15), de sorte à permettre un déplacement axial dudit élément d'étanchéité dans ladite gorge.

7. Butée de suspension selon l'une quelconque des revendications 3 à 6, **caractérisée en ce qu'**un jeu est formé entre les périphéries externe de l'élément d'étanchéité (14) et interne de la gorge (15).

8. Butée de suspension selon la revendication 7, **caractérisée en ce que** le jeu est axial-radial de sorte à permettre un pivotement de l'élément d'étanchéité (14) dans la gorge (15).

9. Butée de suspension selon l'une quelconque des revendications 2 à 8, **caractérisée en ce qu'**elle comprend deux espaces annulaires latéraux qui sont formées entre les diamètres intérieurs et extérieurs du couvercle (11) et du support (12), un élément d'étanchéité (14) étant disposé dans chacun des espaces annulaires pour être en contact frottant sur chacune des coupelles et mobile par rapport à au moins une coupelle.

10. Butée de suspension selon l'une quelconque des revendications 1 à 9, **caractérisée en ce que** l'élément d'étanchéité (14) est réalisé en matériau élastomérique.

11. Butée de suspension selon l'une quelconque des revendications 1 à 9, **caractérisée en ce que** l'élément d'étanchéité (14) est réalisé en matériau thermoplastique rigide.

12. Butée de suspension selon la revendication 2 et 11, **caractérisée en ce que** l'élément d'étanchéité (14) est moulé avec la pièce d'habillage (12), ledit élément d'étanchéité étant associée à ladite pièce d'habillage par un pont de matière cassable (17) de sorte, après rupture, à être mobile par rapport à ladite pièce.

13. Butée de suspension selon l'une quelconque des revendications 9 à 12, **caractérisée en ce que** le couvercle (11) comprend une jupe annulaire (13) formant de chaque côté du support un espace annulaire, un chanfrein étant prévu sur le bord libre de la jupe (13) et/ou un bout arrondi étant prévu pour l'élément d'étanchéité (14).

## Patentansprüche

1. Aufhängungsanschlag eines Kraftfahrzeugs, wobei der Anschlag eine oberen Kupelle (1), eine untere Kupelle (2) und rollende Körper (4) umfasst, die zwischen den Kupellen angeordnet sind, um ihre relative Drehung zu ermöglichen, wobei die Kupellen angebracht sind, um zwischen sich mindestens einen ringförmigen Raum aufzuweisen, wobei der Anschlag **dadurch gekennzeichnet ist, dass** er außerdem ein Dichtungselement (14) umfasst, das in dem Raum angeordnet ist, um auf jeder der Kupellen (1, 2) in Reibungskontakt zu sein, wobei das Dichtungselement beweglich mit Bezug auf mindestens eine Kupelle (1, 2) montiert ist.

2. Aufhängungsanschlag nach Anspruch 1, **dadurch gekennzeichnet, dass** die obere (1) und die untere (2) Kupelle jeweils eine Unterlegscheibe (5, 6) umfasst, die mit einem unteren bzw. oberen Rollweg für die rollenden Körper (4) ausgestattet ist, wobei der Anschlag außerdem zwei Verkleidungselemente umfasst, jeweils einen Deckel (11), der auf der oberen Unterlegescheibe (5) assoziiert ist, und einen Träger (12), der unter der unteren Unterlegscheibe (6) assoziiert ist, wobei der ringförmige Raum zwischen dem Deckel und dem Träger vorgesehen ist.

3. Aufhängungsanschlag nach Anspruch 2, **dadurch gekennzeichnet, dass** der ringförmige Raum mindestens eine ringförmige Auskehlung (15) umfasst, die in einem Verkleidungselement (12) gebildet ist, wobei das Dichtungselement (14) beweglich in der Auskehlung montiert ist und gegenüber der Auskehlung in Reibungskontakt auf dem anderen Verkleidungselement (11) ist.

4. Aufhängungsanschlag nach Anspruch 3, **dadurch gekennzeichnet, dass** der ringförmige Raum durch eine Spannweite (16) eines Verkleidungselements (11) begrenzt ist, auf der das Dichtungselement (14) in Reibungskontakt ist, wobei das Dichtungselement beweglich in der Auskehlung (15) gemäß einer normalen Richtung zu der Spannweite montiert ist.

5. Aufhängungsanschlag nach Anspruch 3 oder 4, **dadurch gekennzeichnet, dass** sich die Auskehlung (15) radial erstreckt, wobei ein radiales Spiel zwischen den Durchmessern des Dichtungselements (14) und der Auskehlung (15) gebildet ist, um eine radiale Verschiebung des Dichtungselements in der Auskehlung zu ermöglichen.

6. Aufhängungsanschlag nach einem der Ansprüche 3 bis 5, **dadurch gekennzeichnet, dass** sich die Auskehlung (15) axial erstreckt, wobei ein axiales Spiel zwischen der axialen Abmessung des Dichtungselements (14) und derjenigen der Auskehlung (15) gebildet ist, um eine axiale Verschiebung des Dichtungselements in der Auskehlung zu ermöglichen.

7. Aufhängungsanschlag nach einem der Ansprüche 3 bis 6, **dadurch gekennzeichnet, dass** ein Spiel zwischen dem äußeren Umfang des Dichtungselements (14) und dem inneren Umfang der Auskehlung (15) gebildet ist.

8. Aufhängungsanschlag nach Anspruch 7, **dadurch gekennzeichnet, dass** das Spiel axial-radial ist, um ein Schwenken des Dichtungselements (14) in der Auskehlung (15) zu ermöglichen.

9. Aufhängungsanschlag nach einem der Ansprüche 2 bis 8, **dadurch gekennzeichnet, dass** er zwei seitliche ringförmige Räume umfasst, die zwischen dem inneren und dem äußeren Durchmesser des Deckels (11) und des Trägers (12) gebildet sind, wobei ein Dichtungselement (14) in jedem der ringförmigen Räume angeordnet ist, um auf jeder der Kupellen in Reibungskontakt und beweglich mit Bezug auf mindestens eine Kupelle zu sein.

10. Aufhängungsanschlag nach einem der Ansprüche 1 bis 9, **dadurch gekennzeichnet, dass** das Dichtungselement (14) aus einem elastomeren Material hergestellt ist.

11. Aufhängungsanschlag nach einem der Ansprüche 1 bis 9, **dadurch gekennzeichnet, dass** das Dichtungselement (14) aus einem starren thermoplastischen Material hergestellt ist.

12. Aufhängungsanschlag nach Anspruch 2 und 11, **dadurch gekennzeichnet, dass** das Dichtungselement (14) mit dem Verkleidungselement (12) geformt ist, wobei das Dichtungselement mit dem Verkleidungselement durch ein Brücke aus brechbarem Material (17) assoziiert ist, um, nach dem Bruch, beweglich mit Bezug auf das Element zu sein.

13. Aufhängungsanschlag nach einem der Ansprüche 9 bis 12, **dadurch gekennzeichnet, dass** der Deckel (11) einen ringförmigen Mantel (13) umfasst, der auf jeder Seite des Trägers einen ringförmigen Raum bildet, wobei eine Abfasung auf dem freien Rand des Mantels (13) vorgesehen ist und/oder ein abgerundeter Rand für das Dichtungselement (14) vorgesehen ist.

## Claims

1. Suspension stop for an automobile, wherein said stop comprises an upper cup (1), a lower cup (2) and rolling bodies (4) positioned between said cups to permit them to rotate relatively, wherein said cups are fitted so that they leave at least an annular space between them, wherein said stop is **characterised in that** it further comprises a sealing element (14) that is located in said space so that it is in friction contact with each of the cups (1, 2), and said element is mounted so that it is mobile with respect to at least one cup (1, 2).

2. Suspension stop according to claim 1, **characterised in that** the upper (1) and lower (2) cups each feature a washer (5, 6,) that respectively has a lower and upper bearing ring for the rolling bodies (4), wherein said stop further comprises two cover parts, respectively a cover (11) associated to the upper washer (5) and a support (12) associated underneath the lower washer (6), wherein the annular space is positioned between said cover and said support.

3. Suspension stop according to claim 2, **characterised in that** the annular space has at least one annular groove (15) formed in a cover part (12), wherein the sealing element (14) is fitted so that it is mobile inside said groove and, opposite said groove, is in friction contact with the other cover part (11).

4. Suspension stop according to claim 3, **characterised in that** the annular space is defined by a portion (16) of a cover part (11) with which the sealing element (14) is in friction contact, wherein said sealing element is mounted so that it is mobile in the groove (15) according to a direction that is normal to said portion.

5. Suspension stop according to claim 3 or 4, **characterised in that** the groove (15) extends radially, wherein a radial clearance is formed between the diameters of the sealing element (14) and the groove (15), so as to permit a radial movement of said sealing element inside said groove.

6. Suspension stop according to any of claims 3 to 5, **characterised in that** the groove (15) extends axially, wherein an axial clearance is formed between the axial dimension of the sealing element (14) and that of the groove (15), so as to permit an axial movement of said sealing element inside said groove.

7. Suspension stop according to any of claims 3 to 6, **characterised in that** a clearance is formed between the external periphery of the sealing element (14) and the internal periphery of the groove (15).

8. Suspension stop according to claim 7, **characterised in that** the clearance is axial-radial, so as to permit the sealing element (14) to pivot in the groove (15).

9. Suspension stop according to any of claims 2 to 8, **characterised in that** it comprises two lateral annular spaces which are formed between the internal and external diameters of the cover (11) and the support (12), wherein a sealing element (14) is positioned in each of the annular spaces, so that it is in friction contact with each of the cups (1, 2) and is mounted so that it is mobile with respect to at least one cup (1, 2).

10. Suspension stop according to any of claims 1 to 9, **characterised in that** the sealing element (14) is made from an elastomer type material.

11. Suspension stop according to any of claims 1 to 9, **characterised in that** the sealing element (14) is made from a rigid thermoplastic material.

12. Suspension stop according to claims 2 and 11, **characterised in that** the sealing element (14) is moulded with the cover part (12), wherein said sealing element is associated to said cover part by a bridge of breakable material (17) so that, once broken, it is mobile with respect to said cover part.

13. Suspension stop according to any of claims 9 to 12, **characterised in that** the cover (11) comprises an annular skirt (13) forming on each side of the support an annular space, wherein a chamfer is added to the free edge of the skirt (13) and/or a rounded end on the sealing element (14).
